# EUROPÄISCHE PATENTSCHRIFT

(11) **EP 3 347 643 B1**
(45) Veröffentlichungstag und Bekanntmachung des Hinweises auf die Patenterteilung: **08.05.2019**
(21) Anmeldenummer: 16754431.1
(22) Anmeldetag: 03.08.2016
(51) Int. Cl.: F17C 13/02

(54) **VERFAHREN ZUM OPTIMIEREN DES BEI EINER WIEDERAUFFÜLLUNG ERREICHBAREN BEFÜLLUNGSGRADS EINES KRYOGENEN DRUCKTANKS IN EINEM KRAFTFAHRZEUG**
METHOD FOR OPTIMIZING THE ACCESSIBLE FILLING DEGREE OF A CRYOGENIC TANK IN A MOTOR VEHICLE FOR REFILLING
PROCÉDÉ POUR OPTIMISER LE DEGRÉ D'ACCESSIBILITÉ D'UN TANK CRYOGÉNIQUE DANS UN VEHICULE POUR LA REMPLISSAGE

(30) Priorität: 07.09.2015 DE 102015217085
(43) Veröffentlichungstag der Anmeldung: 18.07.2018
(73) Patentinhaber: Bayerische Motoren Werke Aktiengesellschaft, 80809 München (DE)
(72) Erfinder: MOVSISYAN, Georg, 80992 München (DE); STAHL, Hans-Ulrich, 80807 Muenchen (DE)
(86) Internationale Anmeldenummer: PCT/EP2016/068500
(87) Internationale Veröffentlichungsnummer: WO 2017/041963

(56) Entgegenhaltungen:
- EP-A2- 1 045 224
- DE-A1-102007 057 978
- DE-A1-102009 015 161
- DE-A1-102012 204 818
- US-A1- 2011 252 962

## Beschreibung

Die hier offenbarte Technologie betrifft ein Verfahren zum Optimieren des bei einer Wiederauffüllung erreichbaren Befüllungsgrads eines kryogenen Drucktanks in einem Kraftfahrzeug, insbesondere eines kryogenen Drucktanks in einem Kraftfahrzeug, gemäß Anspruch 1, eine Befüllungsgradoptimierungsvorrichtung zur Optimierung des bei einer Wiederauffüllung erreichbaren Befüllungsgrads eines kryogenen Drucktanks in einem Kraftfahrzeug gemäß Anspruch 9 und einen Drucktank mit einer solchen Befüllungsgradoptimierungsvorrichtung gemäß Anspruch 10.

Kryogene Druckbehältersysteme sind aus dem Stand der Technik bekannt. Sie umfassen kryogene Druckbehälter. Ein solcher Druckbehälter umfasst einen Innenbehälter sowie einen diesen unter Bildung eines superisolierten (z.B. evakuierten) (Zwischen)Raumes umgebenden Außenbehälter. Kryogene Druckbehälter bzw. Drucktanks werden beispielsweise für Kraftfahrzeuge eingesetzt, in denen ein unter Umgebungsbedingungen gasförmiger Kraftstoff bzw. Brennstoff tiefkalt und somit im flüssigen oder überkritischen Aggregatszustand im Wesentlichen also mit gegenüber den Umgebungsbedingungen deutlich höherer Dichte gespeichert wird. Es sind daher hochwirksame Isolationshüllen (z.B. Vakuumhüllen) vorgesehen. Beispielsweise offenbart die EP 1 546 601 B1 einen solchen Druckbehälter. Ferner gehören die Druckschriften DE 10 2012 204818 A1, DE 10 2007 057978 A1,
US 2011/252962 A1, DE 10 2009 015161 A1 und EP 1 045 224 A2 zum Stand der Technik

Die maximal mögliche Dichte an Gas in dem Druckbehälter bzw. Drucktank hängt von der Temperatur und dem Druck des Gases im Drucktank ab. Üblicherweise wird die größte Dichte nach der einer bestimmten Anzahl von Wiederauffüllungen/Betankungen mit Gas erreicht, da dann die niedrigste Temperatur im Drucktank erreicht worden ist. Um das Gas dem Drucktank zu entnehmen, wird das Gas in dem Drucktank, das durch Entnahme von Gas abkühlt, bei Unterschreiten eines vorgegebenen Mindestdrucks intervallartig erwärmt, um einen vorgegebenen Druck zu erreichen bzw. beizubehalten.

Bei bisher bekannten Verfahren bezüglich der Umschaltung einer Erwärmungsvorrichtung zum Erwärmen des Gases im Drucktank von einem Tankwärmetauscher-Regelbetrieb, bei dem das Gas in dem Drucktank (intervallartig) geringfügig erwärmt wird, um einen vorgegebenen Druck (wieder)herzustellen, in einen Tankwärmetauscher-Dauerbetrieb (TWT-Dauerbetrieb), bei dem das Gas in dem Drucktank stetig erwärmt wird, um die Restreichweite zu erhöhen, ist es nachteilig, dass durch das Einschalten des TWT-Dauerbetriebs, sobald eine vorgegebene Dichte des Gases im Drucktank unterschritten ist, bei der nächsten Wiederauffüllung des Drucktanks das Gas im Drucktank und der Drucktank eine recht hohe Temperatur aufweisen und folglich der Drucktank wenig Gas aufnehmen kann bzw. in diesem vorgehalten werden kann. Dies führt dazu, dass nach einer entsprechenden Erwärmung durch den TWT-Dauerbetrieb bei einer erfolgten maximalen Wiederauffüllung des Tanks der erreichbare (maximal mögliche) Befüllungsgrad verringert ist und folglich die maximal mögliche Reichweite des Kraftfahrzeugs verringert ist, weil der Drucktank und das im Drucktank vor der Wiederauffüllung befindliche (Rest)Gas aufgrund der Erwärmung im TWT-Dauerbetrieb eine relativ hohe Temperatur aufweist. Der erreichbare Befüllungsgrad des Drucktanks bzw. die Dichte des Gases im Drucktank ist bei einer erfolgten maximalen Wiederauffüllung aufgrund der durchgeführten Erwärmung des Gases bzw. des Tanks niedrig(er).

Es ist eine Aufgabe der hier offenbarten Technologie, die Nachteile der vorbekannten Lösungen zu verringern oder zu beheben. Weitere Aufgaben ergeben sich aus den vorteilhaften Effekten der hier offenbarten Technologie.

Die Aufgabe(n) wird/werden gelöst durch den Gegenstand des Patentanspruchs 1, den Gegenstand des Patentanspruchs 9 und den Gegenstand des Patentanspruchs 10. Die abhängigen Ansprüche stellen bevorzugte Ausgestaltungen dar.

Somit wird die Aufgabe durch ein Verfahren zum Optimieren des bei einer Wiederauffüllung erreichbaren Befüllungsgrads eines kryogenen Drucktanks in einem Kraftfahrzeug, insbesondere eines kryogenen Drucktanks in einem Kraftfahrzeug, gelöst, wobei eine Erwärmungsvorrichtung zum Erwärmen eines Gases in dem Drucktank zumindest zwei Modi aufweist, nämlich einen Regelbetriebsmodus, in dem die Erwärmungsvorrichtung das Gas in dem Drucktank derart erwärmt, dass ein vorgegebener Druck des Gases im Drucktank erreicht wird, und einen Dauerbetriebsmodus, in dem die Erwärmungsvorrichtung das Gas in dem Drucktank derart stetig erwärmt, dass der Druck des Gases im dem Drucktank über den vorgegebenen Druck hinaus steigt, umfassend die Schritte: Erfassen der Dichte des Gases im Drucktank; Vergleichen der erfassten Dichte des Gases im Drucktank mit einem vorgegebenen Dichtewert; und wenn beim Vergleichen festgestellt wird, dass die erfasste Dichte den vorgegebenen Dichtewert unterschreitet, abhängig von mindestens einer Routeninformation des Kraftfahrzeugs, insbesondere abhängig von einem bestimmten Weg zum Zielort des Kraftfahrzeugs und der auf dem bestimmten Weg zum Zielort vorhandenen Tankstellen zum Wiederauffüllen des Drucktanks mit Gas, entweder Betreiben der Erwärmungsvorrichtung in dem Regelbetriebsmodus oder Umschalten der Erwärmungsvorrichtung von dem Regelbetriebsmodus in den Dauerbetriebsmodus.

Ein Vorteil hiervon ist, dass die Erwärmungsvorrichtung (zusätzlich) abhängig von den Routeninformationen in den Dauerbetriebsmodus umgeschaltet wird und nicht nur abhängig von der Dichte an Gas in dem Drucktank in den Dauerbetriebsmodus umgeschaltet wird. Hierdurch kann der Dauerbetriebsmodus gegenüber einem üblichen Verfahren verzögert bzw. gar nicht eingeschaltet werden, auch wenn eine vorgegebene Dichte unterschritten wird bzw. ist. Durch ein (längeres) Betreiben bzw. Belassen der Erwärmungsvorrichtung im Regelbetriebsmodus bleibt das Gas im Drucktank länger kalt. Folglich wird der erreichbare Befüllungsgrad des Drucktanks mit Gas, d.h. die Menge an Gas, die in dem Drucktank vorgehalten bzw. aufbewahrt wird, bei bzw. nach einer erfolgten maximal möglichen Wiederauffüllung optimiert bzw. erhöht. Hierdurch erhöht sich die Reichweite des Kraftfahrzeugs nach einer durchgeführten Wiederauffüllung. Abhängig von Routeninformationen wird entschieden, ob es notwendig ist, die Erwärmungsvorrichtung in den Dauerbetriebsmodus umzuschalten, um so die (Rest)Reichweite mit dem vorhandenen Gas in dem Drucktank zu erhöhen. Abhängig von der Erreichbarkeit von Tankstellen, insbesondere von Gastankstellen, auf dem Weg zum Zielort, d.h. Tankstellen entlang des Wegs zum Zielort und/oder Tankstellen, die mittels eines kleinen Umwegs vom Weg zum Zielort erreichbar sind, wird der Dauerbetriebsmodus gegenüber herkömmlichen Verfahren später bzw. gar nicht eingeschaltet (die Erwärmungsvorrichtung wird hierbei dann weiter im Regelbetriebsmodus betrieben). Hierdurch bleibt das Gas im Drucktank kühl(er) bzw. weist eine geringere Temperatur auf. Somit kann beim Wiederauffüllen des Drucktanks (Betanken) eine höhere Dichte an Gas in dem Drucktank bzw. ein höherer Befüllungsgrad erreicht werden. Folglich ist nach einer erfolgten (maximalen) Wiederauffüllung, die u.a. durch den maximal möglichen Druck im Drucktank (bevor ein Sicherheitsventil öffnet) bestimmt ist, mehr Gas nach dem Wiederauffüllen in den Drucktank vorhanden.

Gemäß einer weiteren Ausführungsform ist die Entscheidung, ob die Erwärmungsvorrichtung in dem Regelbetriebsmodus betrieben wird oder ob die Erwärmungsvorrichtung von dem Regelbetriebsmodus in den Dauerbetriebsmodus umgeschaltet wird, zusätzlich von einem ausgewählten Betankungsmanagementmodus abhängig, der aus mehreren verschiedenen Betankungsmanagementmodi auswählbar ist, wobei die verschiedenen Betankungsmanagementmodi mehrere Ziele, wie z.B. Reisezeit des Kraftfahrzeugs zum Zielort, Anzahl der notwendigen Betankungen zum Wiederauffüllen des Drucktanks bis zur Erreichung des Zielorts, maximale Reichweite des Kraftfahrzeugs mit dem Gas in dem Drucktank nach einer erfolgten maximal möglichen Wiederauffüllung des Drucktanks, unterschiedlich gewichten. Durch die verschiedenen Betankungsmodi kann der Fahrer bzw. Benutzer des Kraftfahrzeugs bei der Optimierung der Wiederauffüllung des Tanks mit Gas seinem wichtigsten Ziel den Vorrang gegenüber den anderen Zielen geben. Die Ziele, d.h. geringe Reisezeit des Kraftfahrzeugs zum Zielort, geringe Anzahl der notwendigen Betankungen zum Wiederauffüllen des Drucktanks bis zur Erreichung des Zielorts, maximale Reichweite des Kraftfahrzeugs mit dem Gas in dem Drucktank nach einer erfolgten Wiederauffüllung des Drucktanks, sind nicht alle gleichzeitig erfüllbar. Je nach ausgewähltem Betankungsmanagementmodi wird eines dieser Ziele gegenüber den anderen präferiert und die Erwärmungsvorrichtung dementsprechend zu einem bestimmten Zeitpunkt vom Regelbetriebsmodus in den Dauerbetriebsmodus umgeschaltet, der vom präferierten Ziel abhängt.

In einer weiteren Ausführungsform wird ferner abhängig von dem momentanen Gasverbrauch, der erfassten Dichte des Gases im Drucktank, den Routeninformationen des Kraftfahrzeugs und/oder dem ausgewählten Betankungsmanagementmodus eine Tankstelle zum Wiederauffüllen des Drucktanks aus den mit dem vorhandenen Gas im Drucktank erreichbaren Tankstellen ausgewählt und der Fahrer über die ausgewählte bzw. empfohlenen Tankstelle informiert. Ein Vorteil hiervon ist, dass dem Fahrer bzw. Benutzer eine Empfehlung für eine Tankstelle übermittelt bzw. mitgeteilt wird, bei dem der Befüllungsgrad des Tanks mit Gas (ggf. entsprechend dem ausgewählten Betankungsmanagementmodus) nach einer erfolgten maximalen Wiederauffüllung optimiert bzw. erhöht ist. Der Fahrer bzw. Benutzer kann nun entscheiden, ob er dieser Empfehlung folgt oder nicht.

Das Verfahren kann ferner folgenden Schritt umfassend: Anzeigen der Route zur ausgewählten Tankstelle mittels eines Navigationssystems. Vorteilhaft hieran ist, dass dem Fahrer der Weg bzw. die Information zur Route zur ausgewählten bzw. empfohlenen Tankstelle technisch einfach dargestellt wird. Hierdurch kann der Fahrer schnell erfassen, was er tun muss, um zur empfohlenen/ausgewählten Tankstelle zu gelangen und somit einen hohen Befüllungsgrad des Drucktanks nach dem Wiederauffüllen des Drucktanks mit Gas zu erreichen.

In einer weiteren Ausführungsform wird in Abhängigkeit von der Temperatur des Gases im Drucktank und abhängig von der Dichte des Gases im Drucktank der maximal mögliche Befüllungsgrad des Tanks mit Gas und/oder die maximal mögliche Fahrstrecke des Kraftfahrzeugs nach einem vollständigen Wiederauffüllen des Tanks mit Gas berechnet und die Entscheidung, ob die Erwärmungsvorrichtung in dem Regelbetriebsmodus betrieben wird oder ob die Erwärmungsvorrichtung von dem Regelbetriebsmodus in den Dauerbetriebsmodus umgeschaltet wird, ist zusätzlich vom Ergebnis dieser Berechnung abhängig. Bei der Entscheidung zu welchem Zeitpunkt, d.h. an welcher Tankstelle ein Wiederauffüllen des Drucktanks mit Gas durchgeführt wird, ist entscheidend, wieviel Gas in dem Drucktank nach einer erfolgten maximalen Wiederauffüllung (bis zur maximal erreichbaren Dichte des Gases im Drucktank) aufbewahrt werden kann (dies ist abhängig von der Temperatur des Gases im Drucktank und dem Druck des Gases in dem Drucktank vor der Wiederauffüllung) und welche Strecke nach der Betankung mit dem Gas im Drucktank maximal fahrbar ist. Durch die Berechnung und das Einbeziehen dieser Informationen bei der Entscheidung, ob die Erwärmungsvorrichtung in dem Regelbetriebsmodus betrieben wird oder ob die Erwärmungsvorrichtung von dem Regelbetriebsmodus in den Dauerbetriebsmodus umgeschaltet wird, wird das Wiederauffüllen des Drucktanks weiter optimiert bzw. der erreichbare Befüllungsgrad des Drucktanks erhöht. So ist beispielsweise manchen Fahrern wichtig, dass das Kraftfahrzeug nach der nächsten Wiederauffüllung mit dem dann vorhandenen Gas eine bestimmte Mindestfahrstrecke (Mindestreichweite) des Kraftfahrzeugs möglich ist. Durch die Berechnung der genannten Werte und Berücksichtigung dieser wird das Wiederauffüllen bzw. der erreichbare Befüllungsgrad und/oder die Reichweite nach dem Wiederauffüllen des Drucktanks mit Gas weiter verbessert.

Bei dem Verfahren kann, wenn beim Vergleichen festgestellt wird, dass die erfasste Dichte unterhalb des vorgegebenen Dichtewerts liegt, bei positiver Feststellung, dass auf dem bestimmten Weg zum Zielort eine Tankstelle mit dem vorhandenen Gas im Drucktank erreichbar ist, ohne die Erwärmungsvorrichtung in den Dauerbetriebsmodus umzuschalten, die Erwärmungsvorrichtung im Regelbetriebsmodus betrieben werden. Vorteilhaft hieran ist, dass der Dauerbetriebsmodus (zunächst) nicht eingeschaltet wird und folglich das Gas im Drucktank nicht (nennenswert) erwärmt wird. Hierdurch kann die Menge an Gas, die nach dem nächsten (maximalen) Wiederauffüllen in dem Drucktank vorhanden ist, erhöht werden. Hierdurch steigt die maximale Reichweite nach dem nächsten Wiederauffüllungsvorgang.

Bei dem Verfahren kann, wenn erkannt wird, dass die ausgewählte Tankstelle vom Kraftfahrzeug nicht angefahren wird, erneut entschieden werden, ob die Erwärmungsvorrichtung in dem Regelbetriebsmodus betrieben wird oder ob die Erwärmungsvorrichtung von dem Regelbetriebsmodus in den Dauerbetriebsmodus umgeschaltet wird. Hierdurch wird sichergestellt, dass das Kraftfahrzeug nicht aufgrund von Treibstoffmangel liegenbleibt, auch wenn die ausgewählte Tankstelle nicht angefahren wird.

Bei dem Verfahren kann, wenn erkannt wird, dass die ausgewählte Tankstelle vom Kraftfahrzeug nicht angefahren wird, erneut abhängig von dem momentanen Gasverbrauch, der erfassten Dichte des Gases im Drucktank, den Routeninformationen des Kraftfahrzeugs und/oder dem Betankungsmanagementmodus eine Tankstelle zum Wiederauffüllen des Drucktanks aus den mit dem vorhandenen Gas im Drucktank erreichbaren Tankstellen ausgewählt werden und der Fahrer über die erneut ausgewählte Tankstelle informiert werden. Ein Vorteil hiervon ist, dass beim Erkennen des Nichtanfahrens der ausgewählten Tankstelle umgehend eine neue Tankstelle ausgewählt wird und dies dem Fahrer mitgeteilt wird. Hierdurch wird flexibel und schnell auf das Nichtanfahren der ausgewählten Tankstelle reagiert und der Befüllungsgrad des Drucktanks unter den gegebenen Bedingungen optimiert.

Die Aufgabe wird auch durch eine Befüllungsgradoptimierungsvorrichtung zur Optimierung des bei einer Wiederauffüllung erreichbaren Befüllungsgrads eines kryogenen Drucktanks in einem Kraftfahrzeug, insbesondere eines kryogenen Drucktanks in einem Kraftfahrzeug, gelöst, wobei eine Erwärmungsvorrichtung zum Erwärmen eines Gases in dem Drucktank zumindest zwei Modi aufweist, nämlich einen Regelbetriebsmodus, in dem die Erwärmungsvorrichtung das Gas in dem Drucktank derart erwärmt, dass ein vorgegebener Druck erreicht wird, und einen Dauerbetriebsmodus, in dem die Erwärmungsvorrichtung das Gas in dem Drucktank derart stetig erwärmt, dass der Druck des Gases im dem Drucktank über den vorgegebenen Druck hinaus steigt, wobei die Befüllungsgradoptimierungsvorrichtung derart ausgebildet ist, dass, wenn eine erfasste Dichte des Gases im Drucktank unterhalb eines vorgegebenen Dichtewerts liegt, die Befüllungsgradoptimierungsvorrichtung abhängig von Routeninformationen des Kraftfahrzeugs die Erwärmungsvorrichtung von dem Regelbetriebsmodus in den Dauerbetriebsmodus umschaltet.

Ein Vorteil hiervon ist, dass die Befüllungsgradoptimierungsvorrichtung die Erwärmungsvorrichtung abhängig von den Routeninformationen in den Dauerbetriebsmodus umschaltet und nicht nur abhängig von der Dichte an Gas in dem Drucktank in den Dauerbetriebsmodus umschaltet. Hierdurch kann der Dauerbetriebsmodus gegenüber einer üblichen Vorrichtung verzögert bzw. gar nicht eingeschaltet werden, auch wenn eine vorgegebene Dichte unterschritten wird bzw. ist. Durch ein (längeres) Betreiben bzw. Belassen der Erwärmungsvorrichtung im Regelbetriebsmodus bleibt das Gas im Drucktank länger kalt. Folglich kann nach dem nächsten (maximal möglichen) Wiederauffüllen, das durch den maximal möglichen Druck im Drucktank begrenzt ist, mehr Gas in dem Drucktank aufbewahrt werden bzw. vorhanden sein (eine höhere Dichte an Gas im dem Drucktank ist erreichbar). Hierdurch erhöht sich die Reichweite nach einer durchgeführten Wiederauffüllung. Abhängig von Routeninformationen wird entschieden, ob es notwendig ist, die Erwärmungsvorrichtung in den Dauerbetriebsmodus umzuschalten, um so die (Rest)Reichweite mit dem vorhandenen Gas in dem Drucktank zu erhöhen. Abhängig von der Erreichbarkeit von Tankstellen, insbesondere Gastankstellen, auf dem Weg zum Zielort, d.h. Tankstellen entlang des Wegs zum Zielort und/oder Tankstellen, die mittels eines kleinen Umwegs vom Weg zum Zielort erreichbar sind, schaltet die Befüllungsgradoptimierungsvorrichtung den Dauerbetriebsmodus gegenüber herkömmlichen Vorrichtungen später bzw. gar nicht ein. Hierdurch bleibt das Gas im Drucktank kühler bzw. weist eine geringere Temperatur auf. Somit kann beim Wiederauffüllen des Drucktanks (Betanken) eine höhere Dichte an Gas in dem Drucktank erreicht werden.

Die Aufgabe wird auch durch einen Drucktank mit einer oben beschriebenen Befüllungsgradoptimierungsvorrichtung gelöst.

Durch die Routeninformationen und die Informationen über den Tankzustand (Temperatur, Druck und/oder Dichte) kann das Umschalten von Regelbetriebsmodus in Dauerbetriebsmodus effizient gesteuert werden. Das hier aufgezeigte Verfahren bzw. die hier aufgezeigte Vorrichtung ist auch für das sogenannte Autonome Fahren geeignet, bei der eine Datenverarbeitungsanlage bzw. ein Computer die Bewegungen des Kraftfahrzeugs selbständig steuert und durchführt. Hierbei werden die jeweiligen Informationen (z.B. über die ausgewählte anzufahrende Tankstelle) nicht (nur) dem Fahrer bereitgestellt, sondern das Kraftfahrzeug fährt selbständig die ausgewählte Tankstelle an. Hierbei kann der Benutzer des Kraftfahrzeugs weiterhin einen der mehreren Betankungsmanagementmodi auswählen.

Die Befüllungsgradoptimierungsvorrichtung entscheidet selbständig, ob die Erwärmungsvorrichtung in den Dauerbetriebsmodus umgeschaltet wird. Der Fahrer muss hierzu nicht tätig werden bzw. nicht eingreifen. Die Befüllungsgradoptimierungsvorrichtung kann, wenn beim Vergleichen festgestellt wird, dass die erfasste Dichte den vorgegebenen Dichtewert unterschreitet, in Intervallen die Entscheidung, ob die Erwärmungsvorrichtung in dem Regelbetriebsmodus betrieben wird oder ob die Erwärmungsvorrichtung von dem Regelbetriebsmodus in den Dauerbetriebsmodus umgeschaltet wird, jedes Mal neu treffen.

Die Routeninformationen können den (z.B. vom Navigationssystem) bestimmten Weg zum Zielort und die Tankstellen, insbesondere Gastankstellen, vorzugsweise Wasserstofftankstellen, die auf dem Weg zum Zielort liegen, umfassen. Unter Tankstellen, die auf dem Weg zum Zielort liegen, sind auch Tankstellen zu verstehen, die mit kleinen Umwegen von dem Weg zum Zielort bzw. der Route vom Zielort weg (Umgebung der Route), erreichbar sind. Der maximale Umweg kann vorgegeben oder einstellbar sein. Der maximale Umweg zum Erreichen der Tankstelle auf dem Weg zum Zielort beträgt beispielsweise ca. 2 km, ca. 5 km, ca. 10 km oder ca. 20 km. Alternativ oder zusätzlich kann die berechnete Fahrzeit für den Umweg zur Tankstelle berücksichtigt werden.

Möglich ist auch, dass Informationen über die Öffnungszeiten der Tankstellen auf dem Weg zum Zielort berücksichtigt werden, da eine Wiederauffüllung an der jeweiligen Tankstelle nur während der Öffnungszeiten möglich ist.

Die Routeninformationen können alternativ oder zusätzlich Informationen über die (geplante) zu fahrende Streckenentfernung (für die aktuelle Fahrt) umfassen, d.h. wie weit das Kraftfahrzeug bis zum Ziel fährt bzw. fahren soll. Alternativ oder zusätzlich können die Routeninformationen Informationen über eine gewünschte Mindestfahrstrecke des Kraftfahrzeugs (d.h. wie weit mit dem vorhandenen Gas im Drucktank gefahren werden soll) umfassen. Alternativ oder zusätzlich kann eine gewünschte Sollreichweite des Kraftfahrzeugs, die mit dem (Rest)Gas im Drucktank am Ende der Fahrt möglich ist, anstatt oder zusätzlich zu der mindestens einen Routeninformation herangezogen werden. Diese Informationen können von einem Fahrer bzw. Benutzer durch eine Eingabeeinheit eingegeben werden. Diese Informationen können auch alternativ von einem Navigationssystem gewonnen bzw. erhalten werden. Auch denkbar ist, dass diese Informationen aus vorhandenen historischen Daten (d.h. vorausgegangenen Fahrten, insbesondere zu ähnlichen Uhrzeiten bzw. Daten) gewonnen bzw. erhalten werden.

Eine Tankstelle ist eine Vorrichtung zum Wiederauffüllen bzw. Befüllen des Drucktanks mit Gas. Das Gas kann insbesondere Wasserstoff sein oder Wasserstoff umfassen. Die Tankstelle kann insbesondere eine Gastankstelle sein.

Die hier offenbarte Technologie betrifft einen kryogenen Druckbehälter bzw. Drucktank. Der kryogene Druckbehälter bzw. Drucktank kann Brennstoff im flüssigen oder überkritischen Aggregatszustand speichern. Als überkritischer Aggregatszustand wird ein thermodynamischer Zustand eines Stoffes bezeichnet, der eine höhere Temperatur und einen höheren Druck als der kritische Punkt aufweist. Der kritische Punkt bezeichnet den thermodynamischen Zustand, bei dem die Dichten von Gas und Flüssigkeit des Stoffes zusammenfallen, dieser also einphasig vorliegt. Während das eine Ende der Dampfdruckkurve in einem p-T-Diagramm durch den Tripelpunkt gekennzeichnet ist, stellt der kritische Punkt das andere Ende dar. Bei Wasserstoff liegt der kritische Punkt bei 33,18 K und 13,0 bar. Ein kryogener Druckbehälter ist insbesondere geeignet, den Brennstoff bei Temperaturen zu speichern, die deutlich unter der Betriebstemperatur (gemeint ist der Temperaturbereich der Kraftfahrzeugumgebung, in dem das Kraftfahrzeug betrieben werden soll) des Kraftfahrzeuges liegt, beispielsweise mind. 50 Kelvin, bevorzugt mindestens 100 Kelvin bzw. mindestens 150 Kelvin unterhalb der Betriebstemperatur des Kraftfahrzeuges (i.d.R. ca. -40°C bis ca. +85°C). Der Brennstoff kann beispielsweise Wasserstoff sein, der bei Temperaturen von ca. 30 K bis 360 K im kryogenen Druckbehälter gespeichert wird. Der Druckbehälter kann in einem Kraftfahrzeug eingesetzt werden, das beispielsweise mit komprimiertem ("Compressed Natural Gas" = CNG) oder verflüssigtem (LNG) Erdgas betrieben wird. Der kryogene Druckbehälter kann insbesondere einen Innenbehälter umfassen, der ausgelegt ist für Speicherdrücke bis ca. 350 barü, bevorzugt bis ca. 500 barü, und besonders bevorzugt bis ca. 700 barü. Bevorzugt umfasst der kryogene Druckbehälter ein Vakuum mit einem Absolutdruck im Bereich von 10⁻⁹ mbar bis 10⁻¹ mbar, ferner bevorzugt von 10⁻⁷ mbar bis 10⁻³ mbar und besonders bevorzugt von ca. 10⁻⁵ mbar. Die Speicherung bei Temperaturen (knapp) oberhalb des kritischen Punktes hat gegenüber der Speicherung bei Temperaturen unterhalb des kritischen Punktes den Vorteil, dass das Speichermedium einphasig vorliegt. Es gibt also beispielsweise keine Grenzfläche zwischen flüssig und gasförmig.

Die hier offenbarte Technologie wird nun anhand der Figuren erläutert. Es zeigen:
- Fig. 1: ein Druck-Zeit-Diagramm;
- Fig. 2: ein Temperatur-Zeit-Diagramm; und
- Fig. 3: eine schematische Ansicht einer Befüllungsgradoptimierungsvorrichtung mit Drucktank.

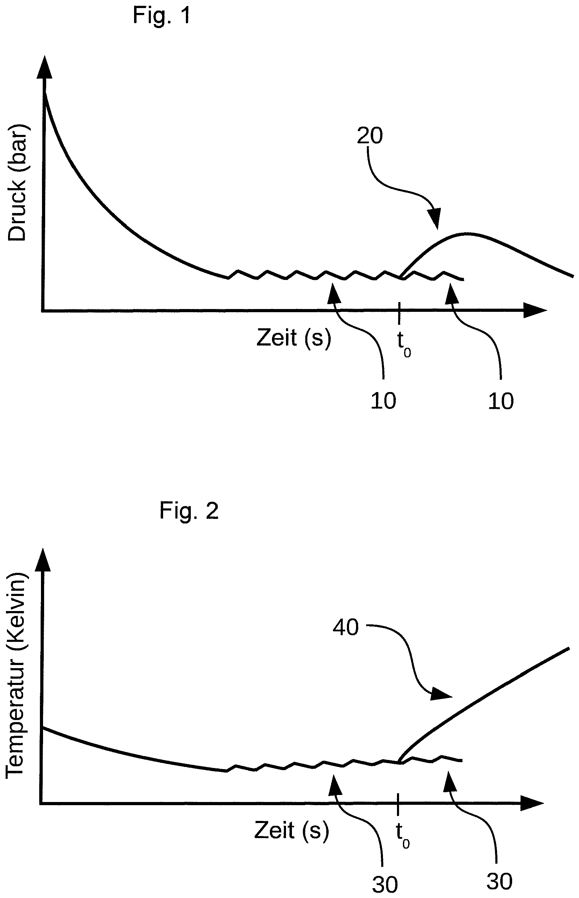

Fig. 1 zeigt ein Druck-Zeit-Diagramm, bei dem der Druck (gemessen in Bar) auf der y-Achse und die Zeit (gemessen in Sekunden) auf der x-Achse dargestellt sind. Im rechten Bereich der Fig. 1 ist der Druckverlauf im Dauerbetriebsmodus 20 gezeigt, in dem der Druck über den vorgegebenen Druckwert ansteigt. Ab Zeitpunkt to sind in Fig. 1 zwei Alternativen dargestellt. Die obere Linie im rechten Bereich der Fig. 1 zeigt den Druckverlauf 20, wenn am Zeitpunkt t₀ die Erwärmungsvorrichtung 3 (aufgrund des Unterschreitens der vorgegebenen Dichte und abhängig von Routeninformationen) vom Regelbetriebsmodus in den Dauerbetriebsmodus umgeschaltet wird und anschließend im Dauerbetriebsmodus betrieben wird, und die untere Linie zeigt den Druckverlauf 10, wenn am Zeitpunkt t₀ die Erwärmungsvorrichtung 3 in dem Regelbetriebsmodus belassen wird bzw. im Regelbetriebsmodus betrieben wird. Der Zeitpunkt t₀ wird durch die Befüllungsgradoptimierungsvorrichtung 1 abhängig von den Routeninformationen (und der Dichte an Gas im Drucktank) bestimmt. Der Regelbetriebsmodus ist der normale, übliche Betriebsmodus, wenn genügend Gas im dem Drucktank 2 vorhanden ist, während dem Drucktank 2 Gas entnommen wird. Im linken Bereich der Fig. 1 fällt der Druck stetig ab. In diesem Bereich findet keine Erwärmung des Gases oder des Drucktanks 2 durch die Erwärmungsvorrichtung 3 statt. Erst wenn der Druck des Gases im Drucktank 2 unter einen vorgegebenen Mindestdruck sinkt, wird der Regelbetriebsmodus der Erwärmungsvorrichtung 3 eingeschaltet (Bereich mit sägezahnähnlichem Verlauf). Unmittelbar vor dem Zeitpunkt to wird die Erwärmungsvorrichtung 3 im Regelbetriebsmodus betrieben.

Wenn sich die Erwärmungsvorrichtung 3 im Regelbetriebsmodus befindet, wird das Gas im Drucktank 2 durch die Erwärmungsvorrichtung 3 intervallartig erwärmt, um einen vorgegebenen Druck des Gases im Drucktank 2 zu erreichen bzw. wiederherzustellen. Die Erwärmungsvorrichtung 3 heizt in dem Regelbetriebsmodus intervallartig, d.h. schaltet ein und wieder aus. Zwischen den Heizzyklen (als auch während der Heizzyklen) wird dem Drucktank 2 Gas entnommen und einer Brennstoffzelle des Kraftfahrzeugs zugeführt, um dieses fortzubewegen. Durch die Entnahme des Gases aus dem Drucktank 2 sinken der Druck und die Temperatur des Gases im Drucktank 2. Daher muss die Erwärmungsvorrichtung 3 das Gas im Drucktank 2 immer wieder (geringfügig, d.h. um einige Kelvin, z.B. ca. 1 K bis ca. 10 K) erwärmen, um den vorgegebenen Druck im Drucktank 2 wieder zu erreichen bzw. konstant zu halten. Durch den vorgegebenen Druck des Gases im Drucktank 2 kann das Gas technisch einfach dem Drucktank 2 entnommen werden.

Durch das zyklische Erwärmen des Gases im Drucktank 2, wenn sich die Erwärmungsvorrichtung 3 im Regelbetriebsmodus befindet, ergibt sich die sägezahnförmige Form des Druckverlaufs 10 im Regelbetriebsmodus. Die Erwärmungsvorrichtung 3 ist bzw. umfasst insbesondere einen Wärmetauscher. Vorstellbar ist jedoch auch, dass die Erwärmungsvorrichtung 3 eine elektrische Heizvorrichtung, eine Laserwärmevorrichtung und/oder eine Drahtheizvorrichtung umfasst. Auch ist denkbar, dass die Wärme dem Drucktank 2 bzw. dem Gas im Drucktank 2 nicht intervallartig, sondern kontinuierlich zugeführt wird. Darüber hinaus kann die Erwärmungsvorrichtung den Drucktank 2 bzw. das Gas im Drucktank 2 auch noch (nach)wärmen, wenn die Erwärmungsvorrichtung 3 ausgeschaltet wurde.

Im linken Bereich der Fig. 2 fällt die Temperatur stetig ab, da dem Drucktank 2 Gas entnommen wird. In diesem Bereich findet keine Erwärmung des Gases oder des Drucktanks 2 durch die Erwärmungsvorrichtung 3 statt. Erst wenn der Druck des Gases im Drucktank 2 unter einen vorgegebenen Mindestdruck sinkt, wird der Regelbetriebsmodus der Erwärmungsvorrichtung 3 eingeschaltet (Bereich mit sägezahnähnlichem Verlauf)

Wenn die Dichte des Gases im Drucktank 2 einen vorgegebenen Wert unterschreitet, wird abhängig von den Routeninformationen die Erwärmungsvorrichtung 3 von dem Regelbetriebsmodus in den Dauerbetriebsmodus umgeschaltet (und anschließend bis zur nächsten erfolgten Wiederauffüllung des Drucktanks 2 mit Gas bzw. dem Ausschalten des Kraftfahrzeugs in dem Dauerbetriebsmodus betrieben).

Fig. 2 zeigt ein Temperatur-Zeit-Diagramm, bei dem der Temperatur (gemessen in Kelvin) auf der y-Achse und die Zeit (gemessen in Sekunden) auf der x-Achse dargestellt ist. Der Temperaturverlauf im Regelbetriebsmodus 30 der Erwärmungsvorrichtung 3 (Bereich mit sägezahnähnlichem Verlauf der Temperatur) ist im Durchschnitt ansteigend, da ein nicht gänzlich vermeidbarer Wärmeaustausch des Gases im Drucktank 2 bzw. des Drucktanks 2 mit der Umgebung stattfindet. Die Sägezahnform der Temperatur kann auch einen flacheren Verlauf aufweisen. Zudem kann bei kontinuierlicher Wärmezuführung kein sägezahnähnlicher Verlauf auftreten.

Ab Zeitpunkt to sind in Fig. 2 zwei Alternativen dargestellt. Die obere Linie zeigt den Temperaturverlauf 40, wenn am Zeitpunkt to (aufgrund des Unterschreitens der vorgegebenen Dichte und abhängig von Routeninformationen) die Erwärmungsvorrichtung 3 vom Regelbetriebsmodus in den Dauerbetriebsmodus umgeschaltet wird, und die untere Linie zeigt den Temperaturverlauf 30, wenn am Zeitpunkt t₀ die Erwärmungsvorrichtung 3 im Regelbetriebsmodus belassen wird bzw. im Regelbetriebsmodus weiterbetrieben wird. Im rechten Bereich der Fig. 2 ist durch die obere Linie der Temperaturverlauf im Dauerbetriebsmodus 40 gezeigt, in dem die Temperatur stetig und massiv ansteigt.

Fig. 1 und Fig. 2 zeigen den gleichen zeitlichen Ablauf, d.h. sie zeigen jeweils Druck und Temperatur zum jeweils gleichen Zeitpunkt. Der Zeitpunkt to in Fig. 1 entspricht somit dem Zeitpunkt to in der Fig. 2.

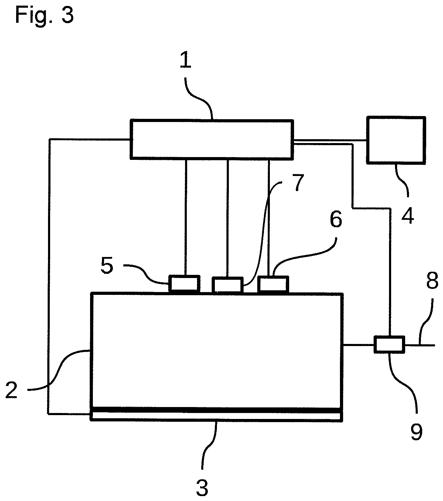

Fig. 3 zeigt eine Befüllungsgradoptimierungsvorrichtung 1 mit einem Drucktank 2. Eine Erwärmungsvorrichtung 3 ist zum Erwärmen des Gases im Drucktank 2 bzw. zum Erwärmen des Drucktanks 2 angeordnet. Die Erwärmungsvorrichtung 3 ist auf einer Außenseite bzw. am Drucktank 2 angeordnet. Alternativ kann sie (teilweise oder vollständig) innerhalb des Drucktanks 2 angeordnet sein. Die Befüllungsgradoptimierungsvorrichtung 1 erfasst über einen Drucksensor 6 den Druck des Gases im Drucktank 2. Über einen Dichtesensor 7 wird die Dichte des Gases im Drucktank 2 erfasst. Die Befüllungsgradoptimierungsvorrichtung 1 erfasst über einen Temperatursensor 5 die Temperatur des Gases im Drucktank 2. Dem Drucktank 2 wird über eine Entnahmeleitung 8 Gas entnommen und der Brennstoffzelle zugeführt. Ein Durchströmmessgerät 9 misst die Menge an Gas, die durch die Entnahmeleitung 8 strömt. Auch diese Messgröße wird durch die Befüllungsgradoptimierungsvorrichtung 1 erfasst. Auch vorstellbar ist, dass über den Temperaturverlauf und den Druckverlauf des Gases im Drucktank 2 die Menge an Gas, die durch die Entnahmeleitung 8 strömt, berechnet wird. Die Befüllungsgradoptimierungsvorrichtung 1 ist mit einem Navigationssystem 4 verbunden. Von dem Navigationssystem 4 werden die Routeninformationen erhalten. Das Navigationssystem 4 kann ein übliches Navigationssystem sein. Das Navigationssystem 4 bestimmt bzw. berechnet (nach Angabe eines Zielorts) den Weg zum Zielort bzw. die Route zum Zielort. Die Befüllungsgradoptimierungsvorrichtung 1 kann insbesondere ein Steuergerät sein. Das Steuergerät kann darüber hinaus weitere Aufgaben erfüllen. Vorstellbar ist auch, dass das Navigationssystem 4 in der Befüllungsgradoptimierungsvorrichtung 1 integriert ist.

Die Befüllungsgradoptimierungsvorrichtung 1 mit dem Drucktank 2 ist in einem Kraftfahrzeug, beispielsweise einem PKW, einem LKW oder einem Motorrad, angeordnet.

Der Temperaturverlauf 40 im Dauerbetriebsmodus (obere Linie im rechten Bereich der Fig. 2) ist stetig ansteigend, da die Erwärmungsvorrichtung 3 das Gas im Drucktank 2 stetig erwärmt. Die Erwärmung liegt im Bereich von mehreren Dutzend Kelvin. Hierdurch steigt der Druck über den vorgegebenen Druckwert an. Nach einiger Zeit neigt sich die Menge an Gas in dem Drucktank 2 dem Ende zu, so dass der Druck im Drucktank 2 trotz weiterer Erwärmung durch die Erwärmungsvorrichtung 3 im Dauerbetriebsmodus wieder absinkt.

Ohne Berücksichtigung der Routeninformationen würde die Erwärmungsvorrichtung 3 bereits vor dem Zeitpunkt t₀ vom Regelbetriebsmodus in den Dauerbetriebsmodus umgeschaltet werden, da die erfasste Dichte unterhalb des vorgegebenen Dichtewerts lag. Durch die Berücksichtigung der Routeninformationen wird später in den Dauerbetriebsmodus umgeschaltet, so dass das Gas in dem Drucktank 2 bzw. der Drucktank 2 selbst bei der nächsten Wiederauffüllung kälter ist, so dass die Menge an Gas bzw. die Gasdichte in dem Drucktank nach erfolgter (maximaler) Wiederauffüllung erhöht ist.

Bei Unterschreiten des vorgegebenen bzw. vorbestimmten Dichtewerts, wird der momentane Verbrauch an Gas und die verbleibende Menge an Gas im Drucktank 2 erfasst. Anschließend (ggf. unter Berücksichtigung des aktuellen Verbrauchs) wird die Restreichweite des Kraftfahrzeugs bestimmt, die mit der vorhandenen Menge an Gas im Drucktank 2 möglich ist, ohne die Erwärmungsvorrichtung 3 von dem Regelbetriebsmodus in den Dauerbetriebsmodus umzuschalten. Auch werden auf dem Weg zum Zielort bzw. entlang des Wegs zum Zielort vorhandene (geöffnete) Tankstellen, insbesondere Gastankstellen, bestimmt. Hierbei wird der ausgewählte Betankungsmanagementmodus, d.h. ob eine möglichst geringe Anzahl an Tankstopps auf dem Weg zum Zielort, eine möglichst geringe Reisezeit zum Zielort oder eine möglichst hohe Reichweite nach erfolgter Wiederauffüllung die höhere Priorität besitzt, berücksichtigt. Sofern die Menge an Gas im Tank ausreichend ist, eine Tankstelle, insbesondere Gastankstelle, (auf dem Weg zum Zielort des Kraftfahrzeugs) zu erreichen, ohne die Erwärmungsvorrichtung 3 vom Regelbetriebsmodus in den Dauerbetriebsmodus umzuschalten, wird die Erwärmungsvorrichtung 3 (zunächst) nicht in den Dauerbetriebsmodus umgeschaltet bzw. in dem Dauerbetriebsmodus betrieben, sondern die Erwärmungsvorrichtung 3 wird (weiterhin) im Regelbetriebsmodus betrieben. Nun wird eine der erreichbaren Tankstellen, insbesondere Gastankstellen, auf dieser Grundlage ausgewählt und der Fahrer über die Entscheidung bzw. Empfehlung informiert. Zusätzlich kann dem Fahrer die Route zu der ausgewählten Gastankstelle auf dem Navigationssystem 4 angezeigt werden.

Sollte der Fahrer die ausgewählte Gastankstelle nicht anfahren oder über eine Eingabeeinheit mitteilen, dass das Anfahren der ausgewählten Gastankstelle nicht gewünscht ist, wird eine neue (andere) Gastankstelle entsprechend den vorhandenen Daten über das Gas im Drucktank 2 sowie der Routeninformationen und entsprechend dem ausgewählten Betankungsmanagementmodus ausgewählt und der Fahrer über die neu ausgewählte bzw. empfohlene Gastankstelle informiert. Zudem wird bestimmt, ob die Erwärmungsvorrichtung 3 von dem Regelbetriebsmodus in den Dauerbetriebsmodus umgeschaltet werden muss, um eine (andere) Gastankstelle zu erreichen.

Wenn festgestellt, dass mit dem vorhandenen Gas im Drucktank 2 keine Gastankstelle auf dem Weg zum Zielort (mehr) erreichbar ist, ohne dass die Erwärmungsvorrichtung 3 in den Dauerbetriebsmodus umgeschaltet wird, wird die Erwärmungsvorrichtung 3 in den Dauerbetriebsmodus umgeschaltet und in dem Dauerbetriebsmodus betrieben, um ein Liegenbleiben des Kraftfahrzeugs mangels Treibstoff zu vermeiden.

Der Dichtewert des Gases im Drucktank 2 kann auf unterschiedliche Weise erfasst werden: Durch Messung des Gewichts des Gases im Drucktank 2 unter Berücksichtigung des Volumens des Drucktanks 2 kann die Dichte des Gases im Drucktank 2 bestimmt werden. Alternativ kann über ein Durchströmmessgerät 9, das die Menge an Gas, das aus dem Drucktank 2 ausströmt bzw. dem Drucktank 2 entnommen wird und zu der Brennstoffzelle geführt wird, bei bekannter Anfangsdichte des Gases im Drucktank 2 und bei bekanntem Volumen des Drucktanks 2 die Dichte des Gases im Drucktank 2 bestimmt werden. Andere Methoden zur Erfassung der Dichte des Gases innerhalb des Drucktanks 2 beispielsweise durch ein Gasdichtemessgerät bzw. Dichtesensor 7 sind vorstellbar.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste:

- 1: Befüllungsgradoptimierungsvorrichtung
- 2: Drucktank
- 3: Erwärmungsvorrichtung
- 4: Navigationssystem
- 5: Temperatursensor
- 6: Drucksensor
- 7: Dichtesensor
- 8: Entnahmeleitung
- 9: Durchströmmessgerät
- 10: Druckverlauf im Regelbetriebsmodus
- 20: Druckverlauf im Dauerbetriebsmodus
- 30: Temperaturverlauf im Regelbetriebsmodus
- 40: Temperaturverlauf im Dauerbetriebsmodus

## Patentansprüche

1. Verfahren zum Optimieren des bei einer Wiederauffüllung erreichbaren Befüllungsgrads eines kryogenen Drucktanks (2) für ein Kraftfahrzeug, wobei eine Erwärmungsvorrichtung (3) zum Erwärmen eines Gases in dem Drucktank (2) zumindest zwei Modi aufweist, nämlich
einen Regelbetriebsmodus, in dem die Erwärmungsvorrichtung (3) das Gas in dem Drucktank (2) derart erwärmt, dass ein vorgegebener Druck des Gases im Drucktank (2) erreicht wird, und
einen Dauerbetriebsmodus, in dem die Erwärmungsvorrichtung (3) das Gas in dem Drucktank (2) derart stetig erwärmt, dass der Druck des Gases im dem Drucktank (2) über den vorgegebenen Druck hinaus steigt, umfassend die Schritte:
- Erfassen der Dichte des Gases im Drucktank (2);
- Vergleichen der erfassten Dichte des Gases im Drucktank (2) mit einem vorgegebenen Dichtewert; und
- wenn beim Vergleichen festgestellt wird, dass die erfasste Dichte den vorgegebenen Dichtewert unterschreitet, abhängig von mindestens einer Routeninformation des Kraftfahrzeugs, insbesondere abhängig von einem bestimmten Weg zum Zielort des Kraftfahrzeugs und der auf dem bestimmten Weg zum Zielort vorhandenen Tankstellen zum Wiederauffüllen des Drucktanks (2) mit Gas und/oder einer Sollreichweite des Kraftfahrzeugs,
entweder
- Betreiben der Erwärmungsvorrichtung (3) in dem Regelbetriebsmodus oder
- Umschalten der Erwärmungsvorrichtung (3) von dem Regelbetriebsmodus in den Dauerbetriebsmodus.

2. Verfahren nach Anspruch 1, wobei
die Entscheidung, ob die Erwärmungsvorrichtung (3) in dem Regelbetriebsmodus betrieben wird oder ob die Erwärmungsvorrichtung (3) von dem Regelbetriebsmodus in den Dauerbetriebsmodus umgeschaltet wird, zusätzlich von einem ausgewählten Betankungsmanagementmodus abhängig ist, der aus mehreren verschiedenen Betankungsmanagementmodi auswählbar ist, wobei die verschiedenen Betankungsmanagementmodi mehrere Ziele, wie z.B. geringe Reisezeit des Kraftfahrzeugs zum Zielort, geringe Anzahl der notwendigen Betankungen zum Wiederauffüllen des Drucktanks (2) bis zur Erreichung des Zielorts, maximale Reichweite des Kraftfahrzeugs mit dem Gas in dem Drucktank (2) nach einer erfolgten Wiederauffüllung des Drucktanks (2), unterschiedlich gewichten.

3. Verfahren nach Anspruch 1 oder 2, wobei
ferner abhängig von dem momentanen Gasverbrauch, der erfassten Dichte des Gases im Drucktank (2), der mindestens einen Routeninformation und/oder der Sollreichweite des Kraftfahrzeugs und/oder dem ausgewählten Betankungsmanagementmodus eine Tankstelle zum Wiederauffüllen des Drucktanks (2) aus den mit dem vorhandenen Gas im Drucktank (2) erreichbaren Tankstellen ausgewählt wird und der Fahrer über die ausgewählte Tankstelle informiert wird.

4. Verfahren nach Anspruch 3, ferner folgenden Schritt umfassend:
Anzeigen der Route zur ausgewählten Tankstelle mittels eines Navigationssystems (4).

5. Verfahren nach einem der vorhergehenden Ansprüche, wobei in Abhängigkeit von der Temperatur des Gases im Drucktank (2) und abhängig von der Dichte des Gases im Drucktank (2) die maximal mögliche Wiederauffüllmenge des Tanks mit Gas und/oder die maximal mögliche Fahrstrecke des Kraftfahrzeugs nach einem vollständigen Wiederauffüllen des Tanks mit Gas berechnet wird und die Entscheidung, ob die Erwärmungsvorrichtung (3) in dem Regelbetriebsmodus betrieben wird oder ob die Erwärmungsvorrichtung (3) von dem Regelbetriebsmodus in den Dauerbetriebsmodus umgeschaltet wird, zusätzlich vom Ergebnis dieser Berechnung abhängig ist.

6. Verfahren nach einem der vorhergehenden Ansprüche, wobei, wenn beim Vergleichen festgestellt wird, dass die erfasste Dichte unterhalb des vorgegeben Dichtewerts liegt, bei positiver Feststellung, dass auf dem bestimmten Weg zum Zielort eine Tankstelle mit dem vorhandenen Gas im Drucktank (2) erreichbar ist, ohne die Erwärmungsvorrichtung (3) in den Dauerbetriebsmodus umzuschalten, die Erwärmungsvorrichtung (3) im Regelbetriebsmodus betrieben wird.

7. Verfahren nach einem der vorhergehenden Ansprüche, insbesondere nach einem der Ansprüche 3 bis 6, wobei,
wenn erkannt wird, dass die ausgewählte Tankstelle vom Kraftfahrzeug nicht angefahren wird, erneut entschieden wird, ob die Erwärmungsvorrichtung (3) in dem Regelbetriebsmodus betrieben wird oder ob die Erwärmungsvorrichtung (3) von dem Regelbetriebsmodus in den Dauerbetriebsmodus umgeschaltet wird.

8. Verfahren nach einem der vorhergehenden Ansprüche, insbesondere nach einem der Ansprüche 3 bis 7, wobei,
wenn erkannt wird, dass die ausgewählte Tankstelle vom Kraftfahrzeug nicht angefahren wird,
erneut abhängig von dem momentanen Gasverbrauch, der erfassten Dichte des Gases im Drucktank (2), der mindestens einen Routeninformation und/oder der Sollreichweite des Kraftfahrzeugs und/oder dem Betankungsmanagementmodus eine Tankstelle zum Wiederauffüllen des Drucktanks (2) aus den mit dem vorhandenen Gas im Drucktank (2) erreichbaren Tankstellen ausgewählt wird und der Fahrer über die erneut ausgewählte Tankstelle informiert wird.

9. Befüllungsgradoptimierungsvorrichtung (1) zur Optimierung des bei einer Wiederauffüllung erreichbaren Befüllungsgrads eines kryogenen Drucktanks (2), insbesondere eines kryogenen Drucktanks (2) in einem Kraftfahrzeug,
wobei eine Erwärmungsvorrichtung (3) zum Erwärmen eines Gases in dem Drucktank (2) zumindest zwei Modi aufweist, nämlich einen Regelbetriebsmodus, in dem die Erwärmungsvorrichtung (3) das Gas in dem Drucktank (2) derart erwärmt, dass ein vorgegebener Druck erreicht wird, und einen Dauerbetriebsmodus, in dem die Erwärmungsvorrichtung (3) das Gas in dem Drucktank (2) derart stetig erwärmt, dass der Druck des Gases im dem Drucktank (2) über den vorgegebenen Druck hinaus steigt,
**dadurch gekennzeichnet, dass**
die Befüllungsgradoptimierungsvorrichtung (1) derart ausgebildet ist,
dass, wenn eine erfasste Dichte des Gases im Drucktank (2) unterhalb eines vorgegebenen Dichtewerts liegt, die Befüllungsgradoptimierungsvorrichtung (1) abhängig von der mindestens einen Routeninformation und/ oder der Sollreichweite des Kraftfahrzeugs die Erwärmungsvorrichtung (3) von dem Regelbetriebsmodus in den Dauerbetriebsmodus umschaltet.

10. Drucktank (2) mit einer Befüllungsgradoptimierungsvorrichtung (1) nach Anspruch 9.

## Claims

1. A method for optimising a filling level, which is able to be reached during a refilling procedure, of a cryogenic pressure tank (2) for a motor vehicle, wherein a heating device (3) for heating a gas in the pressure tank (2) has at least two modes, specifically a regular operation mode, in which the heating device (3) heats the gas in the pressure tank (2) such that a predefined pressure of the gas in the pressure tank (2) is reached, and
a continuous operation mode, in which the heating device (3) heats the gas in the pressure tank (2) continuously such that the pressure of the gas in the pressure tank (2) rises beyond the predefined pressure, the method comprising the steps of:
- detecting the density of the gas in the pressure tank (2);
- comparing the detected density of the gas in the pressure tank (2) with a predefined density value; and
- if, during the comparison, it is determined that the detected density drops below the predefined density value, then, depending on at least one item of route information of the motor vehicle, more especially depending on a determined route to the destination of the motor vehicle and the refuelling stations provided on the determined route to the destination for refilling the pressure tank (2) with gas and/or a target range of the motor vehicle, either
- the heating device (3) is operated in the regular operation mode or
- the heating device (3) is switched from the regular operation mode into the continuous operation mode.

2. A method according to claim 1, wherein
the decision as to whether the heating device (3) is operated in the regular operation mode or whether the heating device (3) is switched from the regular operation mode into the continuous operation mode is additionally dependent on a selected refuelling management mode which is selectable from multiple different refuelling management modes, wherein the different refuelling management modes weight multiple goals differently, for example a short travel time of the motor vehicle to the destination, a low number of required refuelling procedures for refilling the pressure tank (2) until the destination is reached, and a maximum range of the motor vehicle with the gas in the pressure tank (2) after a refilling procedure of the pressure tank (2) is carried out.

3. A method according to claim 1 or 2, wherein
furthermore depending on the current gas consumption, the detected density of the gas in the pressure tank (2), the at least one item of route information and/or the target range of the motor vehicle and/or the selected refuelling management mode, a refuelling station for refilling the pressure tank (2) is selected from the refuelling stations which are able to be reached with the available gas in the pressure tank (2), and the driver is informed of the selected refuelling station.

4. A method according to claim 3, further comprising the step of:
displaying the route to the selected refuelling station by means of a navigation system (4).

5. A method according to any one of the preceding claims, wherein
the maximum possible refilling quantity of the tank with gas and/or the maximum possible driving distance of the motor vehicle after the tank has been completely refilled with gas is calculated depending on the temperature of the gas in the pressure tank (2) and depending on the density of the gas in the pressure tank (2), and the decision as to whether the heating device (3) is operated in the regular operation mode or whether the heating device (3) is switched from the regular operation mode into the continuous operation mode is additionally dependent on the result of said calculation.

6. A method according to any one of the preceding claims, wherein
if, during the comparison, it is determined that the detected density is below the predefined density value, the heating device (3) is operated in the regular operation mode in case of a positive determination that, on the determined route to the destination, a refuelling station is able to be reached with the available gas in the pressure tank (2) without switching the heating device (3) into the continuous operation mode.

7. A method according to any one of the preceding claims, more especially according to any one of claims 3 to 6, wherein
if it is detected that the selected refuelling station is not being approached by the motor vehicle, a new decision is made as to whether the heating device (3) is operated in the regular operation mode or whether the heating device (3) is switched from the regular operation mode into the continuous operation mode.

8. A method according to any one of the preceding claims, more especially according to any one of claims 3 to 7, wherein
if it is detected that the selected refuelling station is not being approached by the motor vehicle,
a refuelling station for refilling the pressure tank (2) is again selected, depending on the current gas consumption, the detected density of the gas in the pressure tank (2), the at least one item of route information and/or the target range of the motor vehicle and/or the refuelling management mode, from the refuelling stations which are able to be reached with the available gas in the pressure tank (2), and the driver is informed of the newly selected refuelling station.

9. A filling level optimisation device (1) for optimising a filling level, which is able to be reached during a refilling procedure, of a cryogenic pressure tank (2), more especially a cryogenic pressure tank (2) in a motor vehicle,
wherein a heating device (3) for heating a gas in the pressure tank (2) has at least two modes, specifically a regular operation mode, in which the heating device (3) heats the gas in the pressure tank (2) such that a predefined pressure is reached, and a continuous operation mode, in which the heating device (3) heats the gas in the pressure tank (2) continuously such that the pressure of the gas in the pressure tank (2) rises beyond the predefined pressure,
**characterised in that**
the filling level optimisation device (1) is configured such that, if a detected density of the gas in the pressure tank (2) is below a predefined density value, the filling level optimisation device (1) switches the heating device (3) from the regular operation mode into the continuous operation mode depending on the at least one item of route information and/or the target range of the motor vehicle.

10. A pressure tank (2) with a filling level optimisation device (1) according to claim 9.

## Revendications

1. Procédé permettant d'optimiser le degré de remplissage pouvant être atteint lors d'un réapprovisionnement d'un réservoir sous pression cryogénique (2) d'un véhicule, selon lequel un dispositif de réchauffage (3) permettant de réchauffer le gaz renfermé dans le réservoir sous pression (2) comporte au moins deux modes, à savoir :
un mode de fonctionnement régulé dans lequel le dispositif de réchauffage (3) réchauffe le gaz renfermé dans le réservoir sous pression (2) de façon à atteindre une pression prédéfinie du gaz dans ce réservoir (2), et
un mode de fonctionnement permanent dans lequel le dispositif de réchauffage (3) réchauffe continuellement le gaz renfermé dans le réservoir sous pression (2) de sorte que la pression du gaz renfermé dans le réservoir sous pression (2) augmente au-delà de la pression prédéfinie,
procédé comprenant des étapes consistant à :
- détecter la densité du gaz renfermé dans le réservoir sous pression (2),
- comparer la densité détectée du gaz renfermé dans le réservoir sous pression (2) avec une valeur de densité prédéfinie, et
- lorsqu'il est déterminé lors de la comparaison que la densité détectée est située au-dessous de la valeur prédéfinie de la densité, en fonction d'au moins une information d'itinéraire du véhicule, en particulier en fonction de la trajectoire définie vers le lieu de destination du véhicule et des stations-service présentes sur la trajectoire définie vers le lieu de destination pour permettre de réapprovisionner le réservoir sous pression (2) en gaz, et/ou de l'autonomie de consigne du véhicule, soit
- faire fonctionner le dispositif de réchauffage (3) en mode de fonctionnement régulé, soit
- commuter le dispositif de réchauffage (3) du mode de fonctionnement régulé dans le mode de fonctionnement permanent.

2. Procédé conforme à la revendication 1,
selon lequel,
la décision consistant à déterminer si le dispositif de réchauffage (3) est actionné en mode de fonctionnement régulé ou si le dispositif de réchauffage (3) est commuté du mode de fonctionnement régulé au mode de fonctionnement permanent dépend en outre d'un mode de gestion du ravitaillement sélectionné qui peut être choisi parmi plusieurs modes de gestion du ravitaillement différents, les modes de gestion du ravitaillement différents pondérant différemment plusieurs buts tels qu'à titre d'exemple, une faible durée du trajet du véhicule vers le lieu de destination, un faible nombre de ravitaillements nécessaires pour réapprovisionner le réservoir sous pression (2) jusqu'à avoir atteint le lieu de destination, une autonomie maximum du véhicule avec le gaz présent dans le réservoir sous pression (2) après un réapprovisionnement du réservoir sous pression (2).

3. Procédé conforme à la revendication 1 ou 2,
selon lequel,
en fonction de la consommation en gaz instantanée, de la densité détecté du gaz renfermé dans le réservoir sous pression (2), de l'information d'itinéraire et/ou de l'autonomie de consigne du véhicule et/ou du mode de gestion du ravitaillement sélectionné on choisit en outre, une station-service pour réapprovisionner le réservoir sous pression (2) parmi les stations-service pouvant être atteintes avec le gaz renfermé dans le réservoir sous pression (2), et on informe le conducteur de la station-service choisie.

4. Procédé conforme à la revendication 3,
comprenant en outre,
une étape consistant à afficher l'itinéraire vers la station-service choisie au moyen d'un système de navigation (4).

5. Procédé conforme à l'une des revendications précédentes,
selon lequel,
en fonction de la température du gaz renfermé dans le réservoir sous pression (2) et en fonction de la densité du gaz renfermé dans le réservoir sous pression (2), on calcule la quantité de réapprovisionnement possible maximum du réservoir avec du gaz et/ou le trajet maximum possible du véhicule après un réapprovisionnement total du réservoir avec du gaz, et la décision consistant à déterminer si le dispositif de réchauffage (3) est actionné dans le mode de fonctionnement régulé ou si le dispositif de chauffage (3) est commuté du mode de fonctionnement régulé au mode de fonctionnement permanent est, en outre, dépendante du résultat de ce calcul.

6. Procédé conforme à l'une des revendications précédentes,
selon lequel,
lorsque suite à la comparaison, il est établi que la densité détectée est située au-dessous de la valeur prédéfinie de la densité, en présence d'une détermination positive selon laquelle, on peut atteindre une station-service sur la trajectoire définie vers le lieu de destination avec le gaz présent dans le réservoir sous pression (2) sans que le dispositif de réchauffage (3) soit commuté dans le mode de fonctionnement permanent, ce dispositif de réchauffage (3) est actionné dans le mode de fonctionnement régulé.

7. Procédé conforme à l'une des revendications précédentes, en particulier conforme à l'une des revendications 3 à 6,
selon lequel,
lorsqu'il est identifié que la station-service choisie n'est pas atteinte par le véhicule, on décide à nouveau si le dispositif de réchauffage (3) est actionné dans le mode de fonctionnement régulé ou si le dispositif de réchauffage (3) est commuté du mode de fonctionnement régulé dans le mode de fonctionnement permanent.

8. Procédé conforme à l'une des revendications précédentes, en particulier conforme à l'une des revendications 3 à 7,
selon lequel,
lorsqu'il est identifié que la station-service choisie n'est pas atteinte par le véhicule, on choisit à nouveau, en fonction de la consommation de gaz instantanée, de la densité détectée du gaz renfermé dans le réservoir sous pression (2), de l'information d'itinéraire et/ou de l'autonomie de consigne du véhicule et/ou du mode de gestion du ravitaillement, une station-service pour effectuer un réapprovisionnement du réservoir sous pression (2) parmi les stations-service pouvant être atteintes avec le gaz présent dans le réservoir sous pression (2) et on informe le conducteur de la station-service nouvellement choisie.

9. Dispositif d'optimisation d'un remplissage (1) permettant d'optimiser le degré de remplissage d'un réservoir sous pression cryogénique (2) en particulier d'un réservoir sous pression cryogénique (2) d'un véhicule, pouvant être atteint lors d'un réapprovisionnement,
dans lequel un dispositif de réchauffage (3) permettant de réchauffer le gaz renfermé dans le réservoir sous pression (2) comporte au moins deux modes, à savoir un mode de fonctionnement régulé dans lequel le dispositif de réchauffage (3) réchauffe le gaz présent dans le réservoir sous pression (2), de sorte qu'une pression prédéfinie soit atteinte et un mode de fonctionnement permanent dans lequel le dispositif de réchauffage (3) réchauffe continuellement le gaz renfermé dans le réservoir (2) de sorte que la pression de ce gaz renfermé dans le réservoir (2) augmente au-delà de la pression prédéfinie,
**caractérisé en ce que**
le dispositif permettant d'optimiser le remplissage (1) est réalisé de sorte que, lorsque la densité détectée du gaz renfermé dans le réservoir sous pression (2) est située au-dessous d'une valeur de densité prédéfinie, ce dispositif permettant d'optimiser le degré de remplissage (1) commute, en fonction d'une information d'itinéraire et/ou de l'autonomie de consigne du véhicule, le dispositif de chauffage (3) du mode de fonctionnement régulé dans le mode de fonctionnement permanent.

10. Réservoir sous pression (2) équipé d'un dispositif permettant d'optimiser le degré de remplissage (1) conforme à la revendication 9.
